# EUROPÄISCHE PATENTSCHRIFT

(11) **EP 2 643 591 B1**
(45) Veröffentlichungstag und Bekanntmachung des Hinweises auf die Patenterteilung: **22.06.2016**
(21) Anmeldenummer: 11782422.7
(22) Anmeldetag: 14.11.2011
(51) Int. Cl.: F04B 43/00, F04B 43/04, F04B 19/00, F16K 99/00

(54) **FLUIDISCHER AKTOR MIT VERFORMBARER VERSCHLUSSANORDNUNG UND LANGER LAGERFÄHIGKEIT**
FLUIDIC ACTUATOR HAVING A DEFORMABLE CLOSURE ARRANGEMENT AND LONG SHELF LIFE
ACTIONNEUR FLUIDIQUE PRÉSENTANT UN DISPOSITIF DE FERMETURE DÉFORMABLE ET UNE LONGUE STABILITÉ AU STOCKAGE

(30) Priorität: 24.11.2010 DE 102010061909
(43) Veröffentlichungstag der Anmeldung: 02.10.2013
(73) Patentinhaber: Fraunhofer-Gesellschaft zur Förderung der angewandten Forschung e.V., 80686 München (DE); Technische Universität Chemnitz, 09111 Chemnitz (DE)
(72) Erfinder: OTTO, Thomas, 09249 Taura OT Köthensdorf (DE); NESTLER, Jörg, Dr., 09112 Chemnitz (DE); GESSNER, Thomas, 09113 Chemnitz (DE)
(74) Vertreter: Schenk, Markus
(86) Internationale Anmeldenummer: PCT/EP2011/070061
(87) Internationale Veröffentlichungsnummer: WO 2012/069332

(56) Entgegenhaltungen:
- EP-A1- 2 138 233
- DE-C1- 4 223 019
- US-A- 3 739 573
- US-A1- 2003 156 953
- US-A1- 2004 234 401
- US-A1- 2007 295 605
- US-A1- 2008 098 917
- US-A1- 2009 074 595

## Beschreibung

Mikrofluidische Systeme benötigen häufig Aktoren in Form von Pumpen und/oder Ventilen, die den Transport von Flüssigkeiten durch Kanäle oder Kanalsysteme steuern. Solche Aktoren können beispielsweise derart ausgeführt sein, dass in einer Flüssigkeit (z. B. Wasser) über eine elektrochemische Reaktion ein Gas erzeugt wird, welches unmittelbar oder mittelbar auf ein Fluid in einem Kanal oder Kanalsystem wirkt. Eine solche Aktor-Flüssigkeit kann hier beispielsweise ein Elektrolyt sein, in dem zur Erzielung der aktorischen Wirkung Elektrolyse durchgeführt wird. Ist der Elektrolyt ein wasserbasierter Elektrolyt, so kann z. B. mittels Elektroyse von Wasser Wasserstoff und Sauerstoffgas erzeugt werden, dessen Gasdruck eine aktorische Wirkung ausübt.

Eine in den USA eingereichte Patentanmeldung mit der Veröffentlichungsnummer US 2007/0295605 A1 beschreibt eine Mikropumpe, die eine elektrisch gesteuerte Grenzflächenspannung zwischen einer Quecksilbersäule und einer Elektrolytlösung in einer Kapillarröhre verwendet, sowie als Rückstelldruck den Gasdruck in einer abgeschlossenen Kammer, die mit der Kapillarröhre verbunden ist. Als Membran wird in US 2007/0295605 A1 unter anderem eine flüssige Paraffinschicht vorgeschlagen.

Ein Problem hierbei ist, dass die Flüssigkeit, in der elektrochemisch ein Gas erzeugt werden soll, in sehr kleinen Mengen im System vorliegt und schnell verdunsten kann, was die Lagerfähigkeit der Systeme einschränkt.

Für die Verdunstung und damit die vorliegende Erfindung ist es dabei unerheblich, ob der Elektrolyt tatsächlich flüssig vorliegt oder in seinem Zustand modifiziert (z. B. eingedickt als Gel, etc.) ist.

Gleichzeitig soll der Vorteil eines solchen elektrochemischen Aktors, nämlich durch das große Gasvolumen vergleichsweise große Volumina zu verdrängen, erhalten bleiben. Daher kann die Flüssigkeit im Aktor nicht mit einer sehr dicken oder dichten Folie verschlossen werden. Andererseits besitzen beispielsweise Polymerfolien mit geringer Wasserdampfdurchlässigkeit, wie sie oft z. B. bei Medikamentenverpackungen eingesetzt werden, eine sehr hohe Streckspannung und nur eine sehr geringe Dehnfähigkeit.

Bei Nutzung eines wasserhaltigen Elektrolyten für den elektrochemischen Aktor muss also die Wasserdampfdurchlässigkeit sehr niedrig sein, während der Vorteil des großen erzeugten Gasvolumens möglichst erhalten bleiben soll. Übliche Materialien, wie nahezu alle Elastomere (die grundsätzlich eine große Dehnfähigkeit erlauben), jedoch auch die meisten anderen Kunststofffolien weisen jedoch eine hohe Durchlässigkeit für Wasserdampf auf. Technisch werden hier auch oft Metallisierungen auf oder in diesen Materialien eingesetzt, um die Wasserdampfdurchlässigkeit zu reduzieren. Allerdings würde eine solche Metalli sierung bei den gleichzeitig geforderten großen Dehnungsfähigkeiten der Folien Risse bilden, so dass hier keine stabile Barrierefunktion gewährleistet wäre. Ziel der Erfindung ist daher die Verkapselung eines i. A. wasserhaltigen Elektrolyten derart, dass die Vorteile des im Vergleich mit dem Aktorvolumen bei Normaldruck großen erzeugten Gasvolumen möglichst erhalten bleiben, aber zumindest nicht so stark verringert werden, dass die Aktorfunktion nicht mehr gewährleistet ist.

Diese Aufgabe wird durch einen fluidischen Aktor mit den Merkmalen des Anspruchs 1 oder ein Verfahren zum Bereitstellen eines fluidischen Aktors nach Anspruch 23 gelöst.

Gemäß der hierin offenbarten Lehre wird eine aktivierbare Substanz (beispielsweise ein Elektrolyt) zumindest auf einer Seite durch ein Material oder eine Materialkombination verschlossen, welches zumindest teilweise aus Paraffin besteht. Paraffin weist einen geringen Wasserdampfpermeationskoeffizienten auf.

Gemäß Ausführungsbeispiel der vorliegenden Erfindung wird ein fluidischer Aktor bereitgestellt. Der fluidische Aktor umfasst eine Basisanordnung mit zumindest einem darin ausgebildeten Hohlraum, eine aktivierbare Subtanz innerhalb des Hohlraums und eine verformbare Verschlussanordnung zum Verschließen des Hohlraums. Die aktivierbare Substanz ist derart ausgebildet oder gewählt, dass sie durch geeignete Aktivierung zumindest teilweise umgewandelt werden kann und dabei eine Druckänderung in dem Hohlraum bewirkt. Die Aktivierung kann durch unterschiedliche äußerte Einflüsse erfolgen, wobei beispielhaft das Anlegen einer elektrischen Spannung, eine Temperaturänderung oder eine Strahlung mit bestimmten Eigenschaften genannt sei. Die verformbare Verschlussanordnung verschließt den Hohlraum bzw. die Kavität, so dass in Zusammenwirkung mit weiteren Begrenzungen des Hohlraums wie z. B. Hohlraumwände und -boden, der Hohlraum in der Regel flüssigkeitsdicht und/oder gasdicht gegenüber der Umgebung ist. Die verformbare Verschlussanordnung umfasst eine Folie mit einem Paraffinanteil oder eine dehnbare Folie mit einer Paraffinschicht an zumindest einer Hauptfläche. Ferner ist die verformbare Verschlussanordnung dazu ausgelegt, bei Aktivierung der aktivierbaren Substanz aufgrund der Druckänderung der aktivierbaren Substanz verformt zu werden. Die Verformung kann beispielsweise plastisch oder elastisch sein. Bei einer elastischen Verformung kehrt die Verschlussanordnung wieder zu ihrer ursprünglichen Gestalt zurück, sobald die aktivierbare Substanz sich nach Nachlassen der Aktivierung oder einer Deaktivierung wieder in einen Ausgangszustand zurückkehrt.

Die Verformung der verformbaren Verschlussanordnung kann für die Funktionsweise des fluidischen Aktors ausgenutzt werden, da mit der Verformung auch eine zumindest teilweise Bewegung der Verschlussanordnung einhergeht, mit der ein Element oder Materie manipuliert werden kann, das/die außerhalb der Verschlussanordnung befindlich ist. Die verformbare Verschlussanordnung kann somit als aktives Element des fluidischen Aktors angesehen werden. Durch die Verwendung von Paraffin in der verformbaren Verschlussanordnung oder in Teilen beziehungsweise Elementen davon gelingt es, die Verschlussanordnung einerseits genügend verformbar zu machen, dass der fluidische Aktor eine Aktorwirkung einer gewünschten Stärke erzielen kann, und andererseits eine genügende Undurchlässigkeit gegenüber der aktivierbaren Substanz oder Bestandteilen davon aufweist.

Gemäß Ausführungsbeispielen kann das paraffinhaltige Element eine Folie mit einem Paraffinanteil sein. In ein für die Folie verwendetes Folienmaterial kann beispielsweise bereits während der Folienherstellung ein Paraffinanteil eingebracht worden sein.

Häufig ist die aktivierbare Substanz so gewählt, dass sie bei der Aktivierung den Aggregatzustand zumindest teilweise ändert, beispielsweise von flüssig zu gasförmig. Die Änderung des Aggregatzustandes kann auch dadurch erfolgen, dass die aktivierbare Substanz zumindest teilweise in ein oder mehrere andere Substanzen umgewandelt wird. Die Verschlussanordnung wird aufgrund einer Änderung des Drucks innerhalb des Hohlraums verformt. Meist wird der Druck ausgehend von einem Ruhezustand des fluidischen Aktors in dem Hohlraum durch die Aktivierung erhöht, so dass sich die verformbare Verschlussanordnung aufgrund der Druckerhöhung nach außen verformt beziehungsweise wölbt.

Gemäß weiteren Ausführungsbeispielen kann das paraffinhaltige Element eine Paraffinschicht sein. Die Verschlussanordnung kann weiterhin eine dehnbare Folie umfassen und die Paraffinschicht kann an zumindest einer Hauptfläche der dehnbaren Folie angeordnet sein. Beispielsweise ist die dehnbare Folie mit der Paraffinschicht beschichtet. Anstelle einer Folie kann über oder unter der Paraffinschicht eine Elastomerschicht vorgesehen sein. Eine derartige Elastomerschicht kann während der Herstellung der Verschlussanordnung z. B. durch Auftragen hergestellt werden, wodurch unter Umständen eine gute mechanische Verbindung zwischen der Elastomerschicht und der Paraffinschicht erzielt werden kann. Die zumindest teilweise Paraffin enthaltende Schicht kann z.B. Hartparaffin umfassen.

Gemäß Ausführungsbeispielen kann die dehnbare Folie aus einem der folgenden Materialien bestehen: Naturkautschuk, Silikonkautschuk, Butylgummi und Polybutadien. Diese Materialien weisen eine gute Dehnbarkeit und teilweise auch Elastizität auf, so dass sich eine in dem Hohlraum einstellende Druckänderung in eine relativ große Verformung und Auslenkung der dehnbaren Folie übertragen lässt.

Gemäß Ausführungsbeispielen kann die Paraffinschicht im Bereich des Hohlraums der dehnbaren Folie angeordnet sein, und zwar vorzugsweise ausschließlich in diesem Bereich, jedenfalls im Wesentlichen. Der Bereich des Hohlraums kann dabei so definiert sein, dass er sich durch eine Verlängerung des Hohlraums in Richtung einer flächennormalen Richtung der dehnbaren Folie ergibt. Mit einer derartigen Anordnung kann ein Großteil der Verflüchtigung der aktivierbaren Substanz durch die dehnbare Folie verhindert werden.

Im Gegensatz zum vorherigen Ausführungsbeispiel kann bei einem anderen Ausführungsbeispiel die Paraffinschicht im Wesentlichen ganzflächig an der dehnbaren Folie angeordnet sein. Unter anderem kann dadurch der Herstellungsprozess vereinfacht werden.

Gemäß Ausführungsbeispielen kann die Paraffinschicht durch eines der folgenden Verfahren auf die dehnbare Folie aufgebracht sein: einen Druckprozess (beziehungsweise durch Drucken), einen Tauchprozess, einen Sprühprozess, einen Aufschleuderprozess, einen Auftropfprozess, einen Aufdispensierungsprozess oder eine Kombination davon. Je nach Art des verwendeten Verfahrens lässt sich die Paraffinschicht gezielt an der dehnbaren Folie aufbringen, beispielsweise ausschließlich in ausgewählten Bereichen oder mit einer definierten Dicke und in gleichmäßiger Weise. Paraffin eignet sich für die genannten Verfahren.

Gemäß Ausführungsbeispielen kann das paraffinhaltige Element eine mit einer Paraffinschicht versehene Elastomerschicht sein.

Der fluidische Aktor kann ein elektrolytischer Aktor sein, wobei die Aktivierung der aktivierbaren Substanz durch Anlegen einer Spannung an zwei im Hohlraum angeordneten Elektroden erfolgt. Der verwendete Elektrolyt kann ein wasserbasierter Elektrolyt sein, welcher sich bei Anlegen einer elektrischen Spannung (zumindest teilweise) in Wasserstoff und Sauerstoff zersetzt, die beide gasförmig vorliegen und somit ein größeres Volumen einnehmen als der noch flüssige Elektrolyt vor der Durchführung der Elektrolyse. Mit diesem Prinzip kann in kurzer Zeit und mit relativ geringer Aktivierungsenergie eine große Volumenänderung des Elektrolyts als aktivierbare Substanz erreicht werden.

Die aktivierbare Substanz beziehungsweise der Elektrolyt kann entweder flüssig, eingedickt, als Gel oder in einer anderen Form vorliegen. Die gemäß der hierin vorgestellten Lehre erzielte Verringerung der Verdunstung des Elektrolyts und insbesondere des darin enthaltenen Wassers wird bei vielen Erscheinungsformen des Elektrolyts erreicht, so dass die Verwendung von Paraffin in der Verschlussanordnung auch bei eingedicktem oder gelförmigem Elektrolyt möglich und förderlich ist.

Gemäß Ausführungsbeispielen weist die Verschlussanordnung eine Wasserdampfpermeabilität von weniger als 10g/m²/d auf. Bevorzugt wäre eine Wasserdampfpermeabilität von weniger als 5g/m²/d oder sogar von weniger als 1g/m²/d.

In Ausführungsbeispielen weist die Verschlussanordnung eine Dehnfähigkeit von mehr als 100 %, bezogen auf einen Ruhezustand oder nichtaktivierten Zustand, auf. Vorzugsweise liegt dieser Wert bei mehr als 200 %, mehr als 300 % oder mehr als 500 %.

Gemäß Ausführungsbeispielen hat die Verschlussanordnung und insbesondere eine darin verwendete Folie oder Schicht eine Streckspannung von weniger als 20MPa, vorzugsweise < 10MPa oder sogar < 5MPa.

Das Paraffin kann direkt auf dem Elektrolyt aufgebracht sein, beispielsweise durch einen Dispensierungsprozess oder einen Druckprozess. In diesem Fall kann auf eine Trägerfolie verzichtet werden. Dem Paraffin kann zum Erreichen einer benötigten Verformbarkeit ein geeignetes Material beigemischt werden.

Das paraffinhaltige Element kann Abmessungen haben, die größer sind als die Abmessungen einer zu verschließenden Öffnung des Hohlraums, so dass ein Rand des paraffinhaltigen Elements über die Öffnung nach außen ragt. Mittels des Rands kann das paraffinhaltige Element an Wänden oder Flächen festgelegt sein, die die Öffnung einfassen. Dadurch kann die Randdichtigkeit verbessert werden, da die aktivierbare Substanz beziehungsweise der Elektrolyt nicht durch Spalte zwischen dem paraffinhaltigen Element und weiteren Begrenzungselementen des Hohlraums entweichen kann.

Gemäß Ausführungsbeispielen kann die Verschlussanordnung ein Rillenmuster oder ein Wellenmuster aufweisen. Ein Rillen- oder Wellenmuster weist eine vergrößerte tatsächliche Fläche auf als die Fläche, die es in seinem Anfangszustand einnimmt. Dadurch ist ein Rillen- oder Wellenmuster zumindest in einer vorgegebenen Verformungsrichtung mit relativ geringer Kraft- oder Druckeinwirkung verformbar, da lediglich die Rillen oder Wellen auseinander gezogen beziehungsweise flacher gemacht werden. Somit bringt die Verschlussanordnung dem Gasdruck relativ wenig Widerstand entgegen. Unter das Prinzip der Rillen- oder Wellenmuster fallen auch kreisförmige, quadratische, rechteckige oder ovale Anordnung von Rillen beziehungsweise Wellen, sowie weitere denkbare Anordnungen.

Durch eine derartige Strukturierung der Verschlussanordnung wird eine leichte Verformbarkeit gegebenenfalls bis zur vollständigen Streckung aufrechterhalten.

Gemäß damit verbundenen Ausführungsbeispielen kann die Verschlussanordnung eine Membran umfassen, die aus zumindest einem der folgenden Materialien besteht: Metall, thermoplastischer Kunststoff, duroplastischer Kunststoff und/oder Elastomer. Zusätzlich kann die Membran mit einer zumindest teilweise Paraffin enthaltenden Schicht als das paraffinhaltige Element versehen sein.

Der Hohlraum kann aus einem Bodenelement und einem strukturierten Klebeband beziehungsweise einer strukturierten Folie gebildet sein, wobei die Verschlussanordnung den Hohlraum ebenfalls mit ausbildet und begrenzt. Das Bodenelement kann beispielsweise eine Leiterplatte sein. Durch die Verwendung einer strukturierten Folie oder eines strukturierten Klebebands lassen sich auf einfache Weise unterschiedliche Konfigurationen des Hohlraums schaffen. Insbesondere kann das Bodenelement mit den genannten Strukturierungskomponenten vorgefertigt sein.

Der fluidische Aktor kann mindestens einen weiteren Hohlraum umfassen, der von dem zuvor genannten Hohlraum durch die Verschlussanordnung getrennt ist. Der weitere Hohlraum kann beispielsweise ein Kanal oder eine Reservoir eines mikrofluidischen Systems sein. Der fluidische Aktor kann auf diese Weise die Bewegung eines Fluids in dem Kanal oder dem Reservoir steuern oder verursachen, indem der fluidische Aktor aktiviert wird, d. h. durch die geeignete Aktivierung der aktivierbaren Substanz.

Der fluidische Aktor kann mehrere Aktoreinheiten umfassen. In diesem Fall umfasst der fluidische Aktor eine Vielzahl von Hohlräumen, die in der Basisanordnung ausgebildet sind. Eine Vielzahl von Verschlussanordnungen sind derart konfiguriert, dass sie jeweils einen der Vielzahl von Hohlräumen verschließen. Bei einer derartigen Konfiguration können die Verschlussanordnungen entweder getrennt vorliegen, oder die Vielzahl der Verschlussanordnungen können als eine zusammenhängende Verschlusseinheit ausgebildet sein. Die zusammenhängende Verschlusseinheit kann beispielsweise eine Folie sein, die über der Vielzahl der Hohlräume angeordnet ist und in einem Randbereich eines jeden Hohlraums mit der Basisanordnung verbunden ist, so dass eine dichte Verbindung zwischen der jeweiligen Verschlussanordnung und den Seitenwänden des entsprechenden Hohlraum gegeben ist.
Ausführungsbeispiele der vorliegenden Erfindung werden nachfolgend Bezug nehmend auf beiliegenden Figuren näher erläutert. Es zeigen:
- Fig. 1a: eine schematische Schnittansicht durch einen elektrochemischen Aktor gemäß einem ersten Ausführungsbeispiel in einem Ausgangszustand;
- Fig. 1b: eine schematische Querschnittsansicht durch den elektrochemischen Aktor von Fig. 1 in einem aktivierten Zustand;
- Fig. 2: einen schematischen Querschnitt durch einen elektrochemischen Aktor gemäß einem zweiten Ausführungsbeispiel;
- Fig. 3: einen schematischen Querschnitt durch einen elektrochemischen Aktor gemäß einem dritten Ausführungsbeispiel, das ähnlich ist zum zweiten Ausführungsbeispiel;
- Fig. 4: einen schematischen Querschnitt durch einen elektrochemischen Aktor gemäß einem vierten Ausführungsbeispiel mit gewellter oder gerillter Verschlussanordnung;
- Fig. 5: einen schematischen Querschnitt durch einen elektrochemischen Aktor gemäß einem fünften Ausführungsbeispiel, das ähnlich dem vierten Ausführungsbeispiel ist,
- Fig. 6: einen schematischen Querschnitt durch einen elektrochemischen Aktor gemäß einem sechsten Ausführungsbeispiel, bei dem eine Paraffin enthaltende Schicht nur im eigentlich aktuierten Bereich aufgebracht ist;
- Fig. 7: einen schematischen Querschnitt durch einen elektrochemischen Aktor gemäß einem siebten Ausführungsbeispiel, das ähnlich zum sechsten Ausführungsbeispiel ist;
- Fig. 8 - 10: schematische Querschnitte durch elektrochemische Aktoren gemäß weiteren Ausführungsbeispielen, bei denen die Verschlussanordnungen lediglich eine Paraffinschicht umfassen; und
- Fig. 11: ein schematisches Flussdiagram eines Herstellungsverfahrens gemäß der hierin offenbarten Lehre.

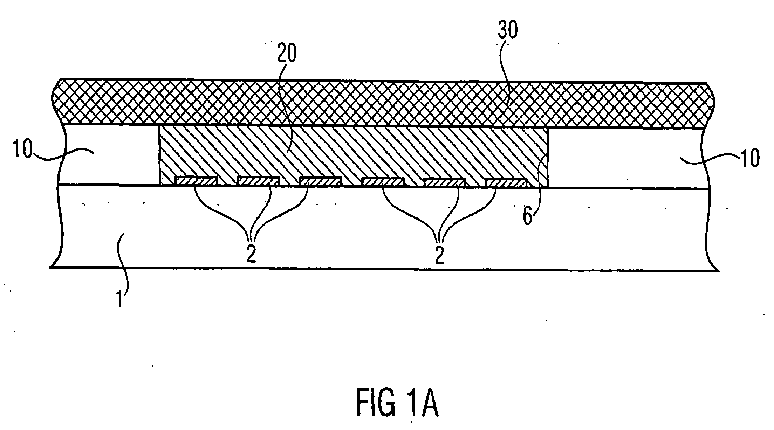

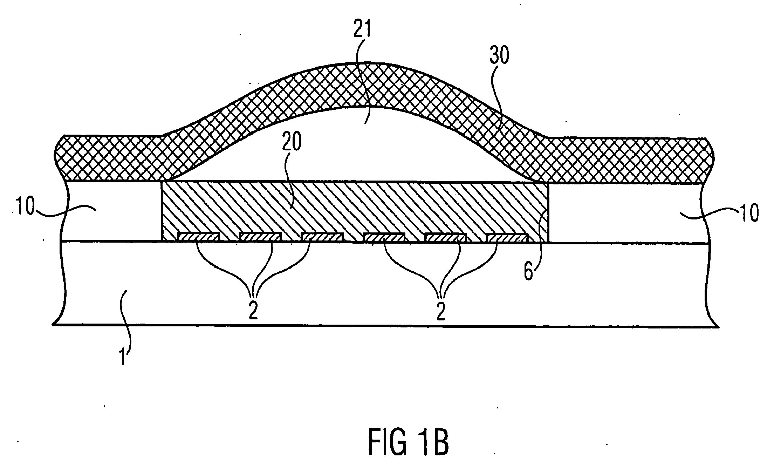

Die Fig. 1a und 1b zeigen einen elektrochemischen Aktor gemäß einem ersten Ausführungsbeispiel in zwei unterschiedlichen Zuständen. Fig. 1a zeigt den elektrochemischen Aktor in einem Ausgangs- beziehungsweise Ruhezustand. Der Ausgangszustand entspricht in der Regel einem nichtaktivierten Zustand des Aktors und der Aktor wird in vielen Anwendungsfällen derart benutzt, dass er über eine lange Zeit in dem Ausgangszustand bleibt, bevor er aktiviert wird (Lagerzeit oder engl.: "shelf life"). Der Aktor umfasst in dem in den Fig. 1a und 1b dargestellten Ausführungsbeispielen ein Substrat 1, das eine plattenförmige Gestalt aufweisen kann. An einer der zwei Hauptflächen, die ein derartiges plattenförmiges Substrat 1 hat, sind eine Anzahl von weiteren Teilen des Aktors angeordnet. Zu diesen Teilen gehören die Seitenwände 10, die einen Hohlraum beziehungsweise eine Kavität 6 des Aktors lateral begrenzen. Eine untere Begrenzung des Hohlraums 6 wird durch das Substrat 1 im Sinne eines Bodenelements gebildet. Das Substrat 1 und die Seitenwände 10 bilden gemeinsam eine Basisanordnung des Aktors, in dem der Hohlraum 6 ausgebildet ist. Die in den Fig. 1a und 1b aus mehreren Teilen dargestellte Basisanordnung des Aktors kann in alternativen Ausführungsbeispielen auch einstückig ausgebildet sein und beispielsweise lediglich das Substrat 1 umfassen, nicht jedoch die Seitenwände 10 als separates Bauteil. In diesem Fall würde der Hohlraum 6 durch eine Ausnehmung in dem Substrat 1 gebildet. Dies kann auf vielfältige Weise geschehen, beispielsweise durch Fräsen oder Ätzen. Unabhängig davon, ob die Basisanordnung einstückig oder aus mehreren Teilen zusammengesetzt ist, ist der Hohlraum 6 an fast allen Seiten von der Basisanordnung begrenzt. Eine Ausnahme bildet in dem ersten Ausführungsbeispiel die Oberseite des Hohlraums 6. Die Begrenzung des Hohlraums 6 an der Oberseite wird durch eine Verschlussanordnung gewährleistet, die nachfolgend noch genauer beschrieben wird.

Das Substrat 1 kann beispielsweise eine Leiterplatte sein. Die Seitenwände 10, die die Kavität 6 für einen Elektrolyt 20 bilden, können beispielsweise eine strukturierte Folie oder ein strukturiertes Klebeband sein. Der Elektrolyt 20 ist z. B. wasserbasierter Elektrolyt, ein Hydrogel, etc. Im Bereich des Hohlraums 6 sind an der dem Hohlraum 6 zugewandten Hauptfläche des Substrats 1 Elektroden 2 angeordnet, an die während eines Betriebs des Aktors selektiv unterschiedliche elektrische Potenziale angelegt werden können, so dass sich innerhalb des Hohlraums 6 und des Elektrolyts 20 ein elektrischer Potenzialunterschied ausbildet, also eine elektrische Spannung. Der Elektrolyt 20 reagiert auf die anliegende elektrische Spannung mit einer chemischen Reaktion, die in der Regel eine Aufspaltung beziehungsweise Zersetzung des Elektrolyts in seine chemischen Bestandteile zur Folge hat. Je nach Art des verwendeten Elektrolyts können dabei gasförmige Elektrolyseprodukte entstehen, die eine geringere Dichte haben als der Elektrolyt in seinem Ausgangszustand und somit bei konstantem Druck ein größeres Volumen benötigen würden. Da aufgrund des abgeschlossenen Hohlraums 6 eine Vergrößerung des Volumens nicht ohne weiteres möglich ist, kommt es auch zu einer Druckerhöhung innerhalb des Hohlraums 6. Die Druckerhöhung wirkt sich ihrerseits in Form einer erhöhten Kraft auf die Begrenzungswände des Hohlraums 6 aus. Üblicherweise sind das Substrat 1 und die Seitenwände 10 ausreichend starr ausgestaltet, dass sich die erhöhte Krafteinwirkung nur unwesentlich als eine Verformung des Substrats 1 und der Seitenwände 10 auswirkt.

An seiner Oberseite ist der Hohlraum 6 durch eine Verschlussanordnung 3 begrenzt. In dem ersten Ausführungsbeispiel gemäß Fig. 1a und 1b umfasst die Verschlussanordnung 3 eine zumindest teilweise Paraffin enthaltende Membran 30. Bei dem für die Membran 30 verwendeten Material kann es sich beispielsweise um ein Folienmaterial handeln, bei dem bereits während der Herstellung ein Paraffinanteil eingebracht wurde. Geeignete Materialien sind beispielsweise: Parafilm® M, Parafilm® Grafting Tape, Parafilm ® Florist Stem Wrap, Parafilm® Floratape, Nescofilm (Hersteller: Bando Chemical Ind. Ltd.) und vergleichbare Produkte. Derartige Produkte bestehen meist aus Paraffinen und Olefinen. Derartige Folienmaterialien weisen bei den kommerziell erhältlichen Dicken der Folien Wasserdampfpermeabilitäten von <1g/m²/d auf, während sie Streckspannungen unter 5 MPa mit Dehnfähigkeiten von vielen 100 % besitzen. Als Membran 30 für einen elektrochemischen Aktor gemäß der hierin vorgestellten Lehre werden sie durch den Gasdruck plastisch verformt.

Fig. 1b zeigt den elektrochemischen Aktor nach einer elektrochemischen Erzeugung eines Gases 21. Die zur Verschlussanordnung 3 gehörende Membran 30 wölbt sich aufgrund des in dem Hohlraum 6 entstehenden Gasdrucks nach oben, da sie im Vergleich zum Substrat 1 und den Seitenwänden 10 sehr viel leichter verformt werden kann. Die durch den erhöhten Gasdruck im Hohlraum 6 erzeugte Volumenänderung bewirkt eine relativ große Auslenkung der Membran 30, insbesondere in der Mitte der Membran 30. Diese relativ große Auslenkung der Membran 30 lässt sich im Betrieb des elektrochemischen Aktors ausnutzen zum mechanischen Ansteuern anderer Elemente, zum Erzielen einer Ventilwirkung oder auch zum Antreiben eines Fluids, das sich in den Fig. 1a und 1b oberhalb der Membran 30 befindet.

Anstelle mit einem Elektrolyt kann der Hohlraum 6 auch mit einer anderen aktivierbaren Substanz gefüllt sein, die sich auf andere Weise als durch elektrochemische Wirkung aktivieren lässt. Beispielsweise lässt sich Wasser durch thermische Aktivierung von seinem bei Raumtemperatur flüssigen Aggregatzustand in den gasförmigen Aggregatzustand überführen. Es sind auch mechanisch/chemisch wirkende Aktoren denkbar, bei denen zwei chemische Komponenten im Ausgangszustand getrennt voneinander innerhalb des Hohlraums 6 vorliegen, um dann beispielsweise durch Entfernen oder Zerstören einer Trennwand zwischen den zwei chemischen Komponenten miteinander vermischt zu werden und eine chemische Reaktion einzugehen, die zu einer Volumen- beziehungsweise Druckänderung innerhalb des Hohlraums 6 führt. Durch das Einbringen des Paraffinanteils in das Material der Membran 30 verbindet die Verschlussanordnung 3 gute Verformbarkeit mit einer geringen Verflüchtigung der aktivierbaren Substanz beziehungsweise des Elektrolyts 20 aus dem Hohlraum 6. Auf diese Weise ist ein mit einer derartigen Membran ausgestatteter fluidischer Aktor lange haltbar, was die Zusammensetzung und Menge der aktivierbaren Substanz 20 innerhalb des Hohlraums 6 angeht. Sofern das verwendete Membranmaterial elastisch ist, ist die Verformung der Membran auch reversibel, das heißt nach Beendigung der Aktivierung des fluidischen Aktors kann die aktivierbare Substanz 20 wieder in ihren Ausgangszustand zurückkehren, dabei auf das ursprüngliche Volumen schrumpfen und der Membran 30 ermöglichen, ebenfalls wieder in den in Fig. 1a dargestellten Ausgangszustand zurückzukehren. Alternativ dazu kann der Aktor für eine einmalige Aktivierung konzipiert sein, der nach der Aktivierung nicht mehr in den Ausgangszustand zurückkehrt.

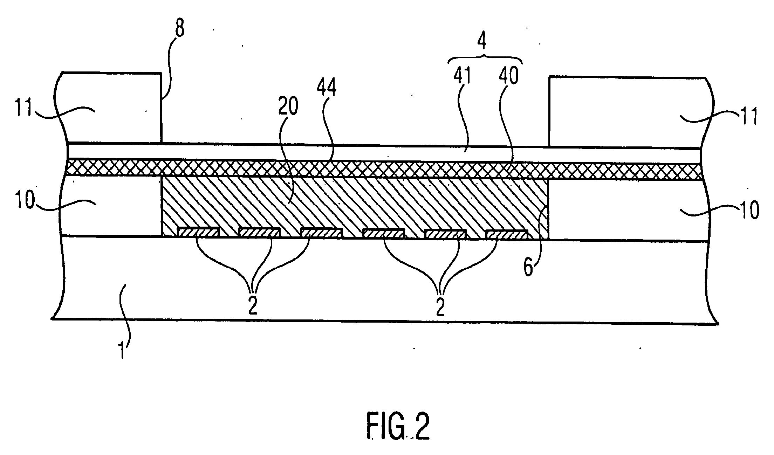

Fig. 2 zeigt einen schematischen Querschnitt durch einen fluidischen Aktor gemäß einem zweiten Ausführungsbeispiel der hierin offenbarten technischen Lehre. In diesem zweiten Ausführungsbeispiel eines elektrochemischen Aktors umfasst die Verschlussanordnung 4 einen Schichtaufbau aus einer Elastomerschicht oder -folie und einer zumindest teilweise Paraffin enthaltenden Schicht zur Verringerung der Wasserdampfpermeation. Die zumindest teilweise Paraffin enthaltende Schicht 40 ist im Wesentlichen ganzflächig zwischen der Elastomerschicht oder -folie 41 und dem Elektrolyt 20 sowie oberen Begrenzungsflächen der Seitenwände 10 angeordnet. Somit liegt die zumindest teilweise Paraffin enthaltende Schicht beziehungsweise Paraffinschicht 40 an einer Hauptfläche 44 der Elastomerschicht oder -folie 41 vor und erstreckt sich parallel zu dieser Hauptfläche. Die Elastomerschicht oder -folie 41 kann im Allgemeinen eine dehnbare Folie 41 sein und zumindest eines der folgenden Materialien umfassen: Naturkautschuk, Silikonkautschuk, Butylgummi und Polybutadien. Andere Materialien mit vergleichbaren Dehnungs- und Elastizitätseigenschaften sind ebenfalls denkbar. Der in Fig. 2 gezeigte fluidische Aktor umfasst auch einen weiteren Hohlraum 8, der bezüglich der Verschlussanordnung 4 entgegengesetzt zum Hohlraum 6 angeordnet ist. Der Hohlraum 8 ist in Fig. 2 als oben offener Hohlraum dargestellt, kann jedoch auch durch geeignete Elemente verschlossen werden. Seitlich wird der Hohlraum 8 durch Seitenwände 11 begrenzt. Eine untere Begrenzung des Hohlraums 8 wird durch die dehnbare Folie 41 bereitgestellt. Der Hohlraum 8 kann ein Kanal oder ein Reservoir in einem mikrofluidischen Bauteil sein. Mit Hilfe des fluidischen Aktors kann der wirksame Querschnitt des Hohlraums 8 im Bereich des fluidischen Aktors variiert werden, da sich bei Aktivierung des Aktors die Verschlussanordnung 4 nach oben wölbt und den Hohlraum 8 dadurch kleiner macht. Als weitere Ausgestaltung können die Seitenwände 11 des Hohlraums 8 so geformt sein, dass der Hohlraum 8 im Wesentlichen eine Querschnittsform aufweist, die der Form der äufgewölbten Verschlussanordnung 4 im aktivierten Zustand entspricht. Der weitere Hohlraum 8 kann beispielsweise halbzylinderförmig oder gewölbeförmig gestaltet sein. Auf diese Weise kann der Hohlraum 8 durch den fluidischen Aktor abgesperrt werden, wodurch ein Durchfluss eines Fluids durch den Hohlraum 8 weitgehend verhindert werden kann.

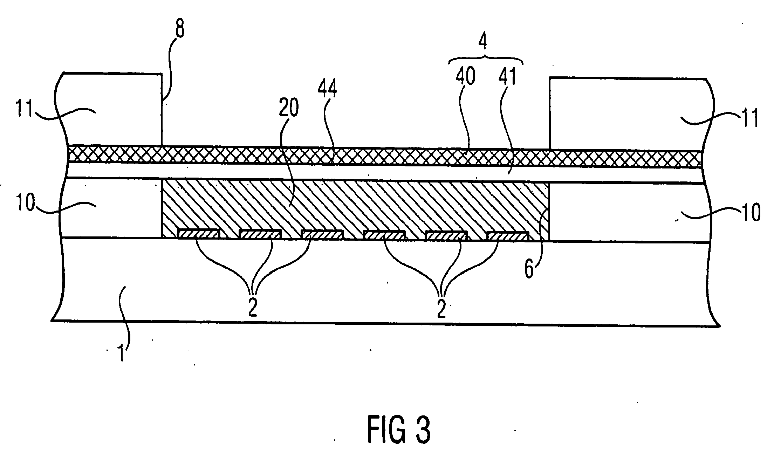

Fig. 3 zeigt ein drittes Ausführungsbeispiel eines fluidischen Aktors, das weitgehend dem zweiten Ausführungsbeispiel ähnelt. Als Unterschied zum zweiten Ausführungsbeispiel von Fig. 2 ist im dritten Ausführungsbeispiel die Schichtfolge innerhalb der Verschlussanordnung 4 vertauscht, sodass die Paraffinschicht 40 an eine obere Hauptfläche 44 der dehnbaren Folie beziehungsweise Schicht 41 angrenzt. Die Entscheidung für das zweite Ausführungsbeispiel oder das dritte Ausführungsbeispiel kann von der Wahl eines Herstellungsverfahrens des fluidischen Aktors beeinflusst sein, falls sich das eine oder das andere Ausführungsbeispiel einfacher und/oder kostengünstiger realisieren lässt.

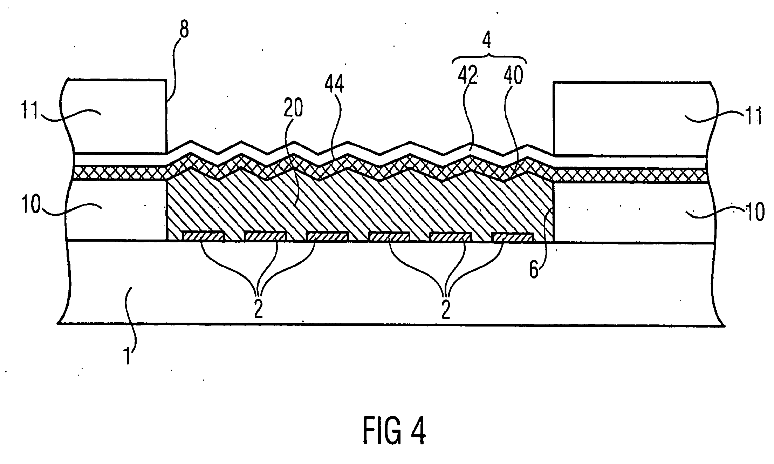

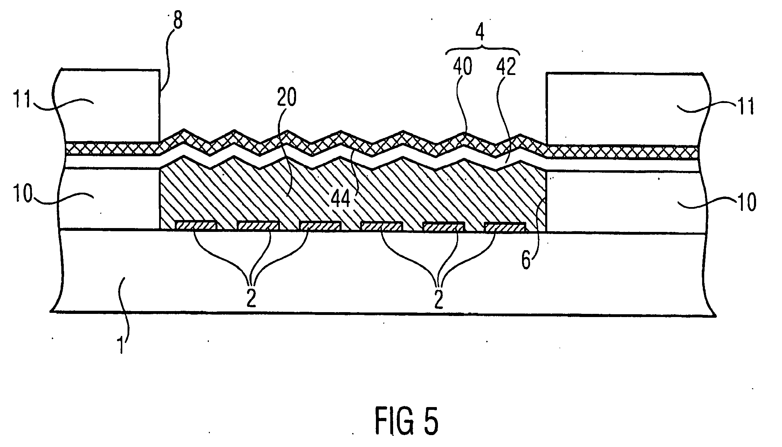

Die Fig. 4 und 5 zeigen ein viertes Ausführungsbeispiel beziehungsweise ein fünftes Ausführungsbeispiel eines fluidischen Aktors gemäß der hierin offenbarten technischen Lehre. Die Fig. 4 und 5 zeigen insbesondere jeweils einen schematischen Querschnitt durch einen Schichtaufbau aus einer zumindest teilweise gewellten oder gerillten Folie und einer zumindest teilweise Paraffin enthaltenden Schicht zur Verringerung der Wasserdampfpermeation.

In Fig. 4 ist die zumindest teilweise Paraffin enthaltende Schicht 40 zwischen der aktivierbaren Substanz 20 und der dehnbaren Folie 42 angeordnet. Die dehnbare Folie beziehungsweise Schicht 42 weist dabei bereits in ihrem Ruhezustand eine Rillen- beziehungsweise Wellenstruktur auf, die sich auch auf die Paraffinschicht 40 und eine Grenzfläche zwischen der Paraffinschicht 40 und der aktivierbaren Substanz 20 überträgt. Wie in Fig. 2 ist die Paraffinschicht 40 somit an einer der zwei Hauptflächen 44 der dehnbaren Folie 42 angeordnet.

In Fig. 5 ist die Reihenfolge der Paraffinschicht 40 und der dehnbaren Folie 42 umgekehrt zu der in Fig. 4, das heißt die dehnbare Folie 42 befindet sich zwischen der Paraffinschicht 40 und der aktivierbaren Substanz 20. Das fünfte Ausführungsbeispiel gemäß Fig. 5 entspricht somit im Großen und Ganzen dem dritten Ausführungsbeispiel von Fig. 3, jedoch mit dem Unterschied, dass die Verschlussanordnung die Rillen- oder Wellenstruktur aufweist.

Die Rillen- oder Wellenstruktur kann für die Verschlussanordnung gewählt werden, wenn gewünscht ist, dass die Membran (die Verschlussanordnung 4) dem Gasdruck möglichst wenig Widerstand entgegenbringt. Hierdurch wird eine leichte Verformbarkeit bis zur vollständigen Streckung der Verschlussanordnung 4 aufrechterhalten. Für eine erfindungsgemäße Membran können hierfür auch sehr steife Folien aus verschiedensten Materialien, wie beispielsweise Metall, thermo- oder duroplastischen Kunststoffen oder auch Elastomere zum Einsatz kommen. Gemäß der hierin offenbarten technischen Lehre sind diese zumindest teilweise mit einer zumindest teilweise Paraffin enthaltenden Schicht versehen.

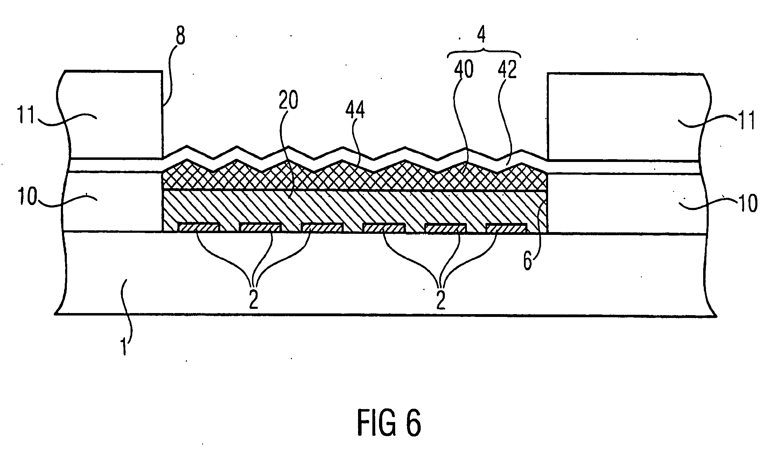

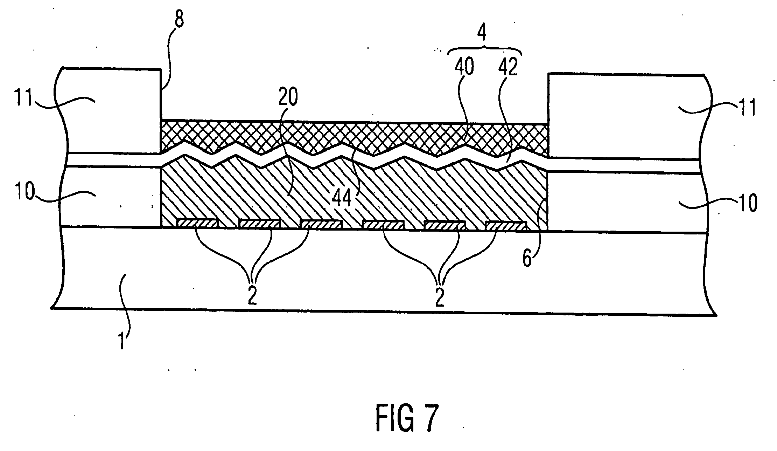

Die Fig. 6 und 7 zeigen ein sechstes Ausführungsbeispiel beziehungsweise ein siebtes Ausführungsbeispiel eines fluidischen Aktors. Der fluidische Aktor ist wiederum in einem schematischen Querschnitt dargestellt, der den Schichtaufbau aus einer zumindest teilweise gewellten oder gerillten Folie 42 und einer zumindest teilweise Paraffin enthaltenden Schicht 40 zur Verringerung der Wasserdampfpermeation zeigt. Die zumindest teilweise Paraffin enthaltende Schicht ist nur im eigentlich aktuierten Bereich aufgebracht. Der eigentlich aktuierte Bereich ist jener Bereich, der sich gemäß der Darstellung in den Fig. 6 und 7 oberhalb des Hohlraums 6 befindet. Ohne Paraffinschicht würde ein Großteil des Wassers oder Wasserdampfs der aktivierbaren Substanz 20 in diesem Bereich entweichen, da die Membran nicht so dicht gegenüber Wasserdampf ist, wie das Substrat 1 oder die Seitenwände 10. Daher kann es sinnvoll sein, die Wasserdampfpermeabilität insbesondere in diesem Bereich zu reduzieren.

Auch ist es möglich, eine (an sich eine hohe Wasserdampfpermeabilität besitzende) Elastomerschicht oder -folie (aber auch jede andere Folie mit großer Dehnfähigkeit) mit einer Paraffinschicht zu versehen, um die Wasserdampfpermeabilität zu reduzieren (siehe Fig. 2 und 3). Die Paraffinschicht 40 kann dabei selektiv nur im Bereich des Elektrolyten aufgebracht sein oder auch ganzflächig. Das Paraffin kann dabei durch verschiedene Verfahren aufgebracht werden, wie beispielsweise aber nicht ausschließlich Druckprozesse, Sprühprozesse, Aufschleuderprozesse, Auftropfen oder -dispensen.

In Fig. 6 ist die auf den eigentlich aktuierten Bereich begrenzte Paraffinschicht 40 zwischen der dehnbaren Folie 42 und der aktivierbaren Substanz 20 vorgesehen. Die dehnbare Folie 42 weist ein Rillen- oder Wellenmuster als Strukturierung auf, welches sich auch auf eine Grenzfläche zwischen der dehnbaren Folie 42 und der Paraffinschicht 40 überträgt, die an der Hauptfläche 44 der dehnbaren Folie 42 befindlich ist. Eine Grenzfläche zwischen der Paraffinschicht 40 und der aktivierbaren Substanz 20 ist dagegen im Wesentlichen plan beziehungsweise eben. Im Gegensatz zur Paraffinschicht 40 setzt sich die dehnbare Folie 42 über einen von den Seitenwänden 10 definierten Rand des Hohlraums 6 nach außen fort. Die dehnbare Folie 42 ist in diesem außerhalb des Hohlraums 6 liegenden Bereichs sandwichartig zwischen den Seitenwänden 10 und 11 eingefasst. Auf diese Weise ist die dehnbare Folie 42 auch bei einer Erhöhung des Gasdrucks im Hohlraum 6 mechanisch an der Basisanordnung 1,10 festgelegt.

In Fig. 7 ist die Reihenfolge der Paraffinschicht 40 und der dehnbaren Folie 42 umgedreht im Vergleich zu Fig. 6, sodass die dehnbare Folie oder Schicht 42 zwischen der Paraffinschicht 40 und der aktivierbaren Substanz 20 vorliegt. Da die dehnbare Folie 42 keine Rillen- oder Wellenstruktur aufweist, sind die Grenzflächen zur Paraffinschicht (an der Hauptfläche 44 der dehnbaren Folie 42) und zur aktivierbaren Substanz 20 ebenfalls rillen- oder wellenförmig. Dagegen ist eine obere Fläche der Paraffinschicht 40 im Wesentlichen eben. Auch in dem in Fig. 7 dargestellten siebten Ausführungsbeispiel ist die Paraffinschicht 40 auf den Bereich des Hohlraums 6, also den eigentlich aktuierten Bereich, begrenzt. Die dehnbare Folie 42 erstreckt sich dagegen, wie in Fig. 6, zwischen den Seitenwänden 10 und 11, um so beispielsweise für eine Festlegung der dehnbaren Folie an der Basisanordnung 1, 10 zu sorgen.

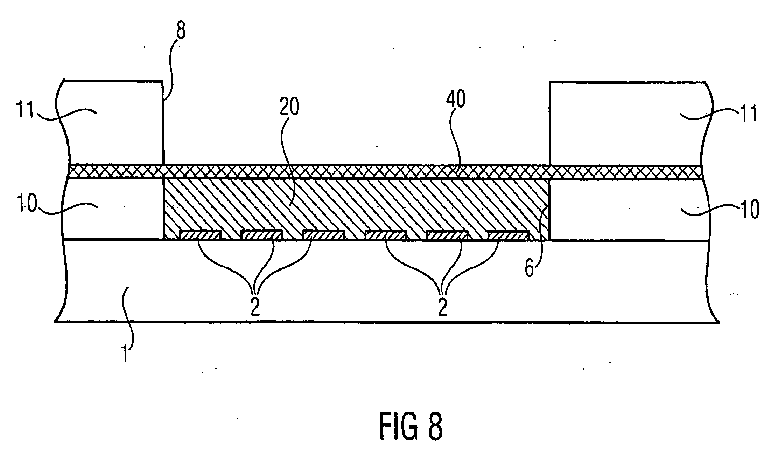

Die Fig. 8 bis 10 zeigen Ausführungsbeispiele, bei denen der Hohlraum 6 ausschließlich mit einer Paraffinschicht 40 verschlossen ist. Die Paraffinschicht 40 kann zum Beispiel durch Druck- oder Dispensionsprozesse aufgebracht worden sein. Das Aufbringen eines Paraffins erfolgt dabei direkt auf den Elektrolyten beispielsweise durch besagtes Dispensen oder Drucken.

In Fig. 8 erstreckt sich die Paraffinschicht 40 im Wesentlichen ganzflächig über eine von dem fluidischen Aktor bereitgestellte Zwischenschicht, die oberhalb der Seitenwände 10 und des Hohlraums 6 verläuft. Des Weiteren verläuft die Zwischenschicht unterhalb der Seitenwände 11. Herstellungstechnisch kann dies so geschehen, dass zunächst die Basisanordnung, bestehend aus Substrat 1 und Seitenwänden 10, bereitgestellt wird, woraufhin der entstandene Hohlraum 6 mit der aktivierbaren Substanz 20 gefüllt wird. Es folgt das Aufbringen der Paraffinschicht 40 über der gesamten sich bietenden Fläche. Anschließend werden noch die Seitenwände 11 für den weiteren Hohlraum 8 auf die Paraffinschicht 40 an den dafür vorgesehenen Stellen aufgebracht.

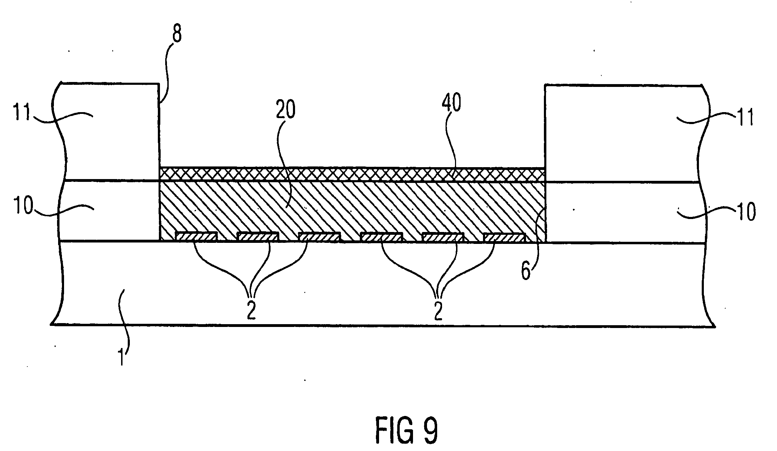

Im Gegensatz zu der ganzflächigen Aufbringung der Paraffinschicht 40, die in Fig. 8 gezeigt ist, ist die Paraffinschicht 40 in Fig. 9 lediglich im Bereich des Hohlraums 6 aufgebracht. Dieses selektive Aufbringen der Paraffinschicht 40 kann mittels entsprechender Masken oder einer Art Siebdruckverfahren erfolgen. Der Bedarf an Paraffin ist bei dem in Fig. 9 gezeigten Ausführungsbeispiel geringer als bei dem in Fig. 8 gezeigten Ausführungsbeispiel. Darüber hinaus sind in Fig. 9 die Seitenwände 10 und 11 direkt miteinander verbunden und nicht, wie in Fig. 8, mittels der dazwischen liegenden Paraffinschicht 40. Dadurch kann unter Umständen eine höhere Stabilität des fluidischen Aktors erzielt werden.

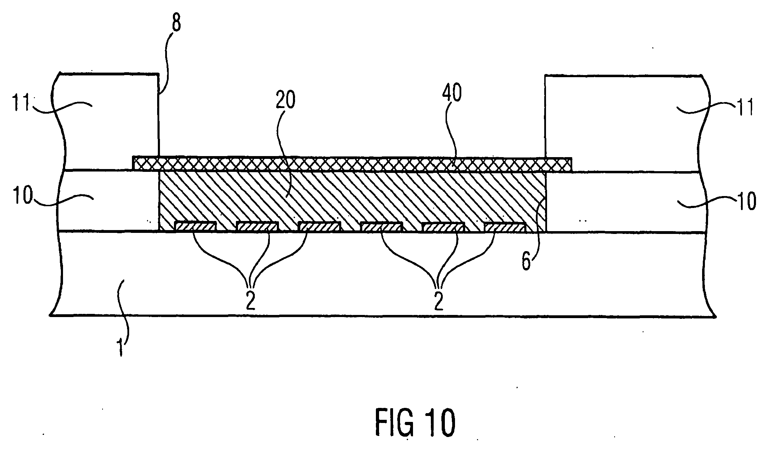

Fig. 10 stellt eine Konfiguration der Paraffinschicht 40 dar, die eine Mischung der Ausführungsbeispiel von Fig. 8 und 9 ist. Die Paraffinschicht 40 ragt über den von dem Hohlraum 6 definierten Bereich nach außen vor und bildet somit einen überstehenden Rand, der eine Grenzfläche mit der Basisanordnung 1,10, insbesondere den Seitenwänden 10, aufweist. Dieser Rand kann beispielsweise vorgesehen sein, damit die Paraffinschicht 40 bei Verformung in Folge geeigneter Aktivierung der aktivierbaren Substanz keine Lücke zwischen dem Hohlraum 6 und dem weiteren Hohlraum 8 aufweist, durch die das gasförmige Produkt 21 (Fig. 1b) entweichen kann, wodurch der Aktor unbrauchbar werden könnte.

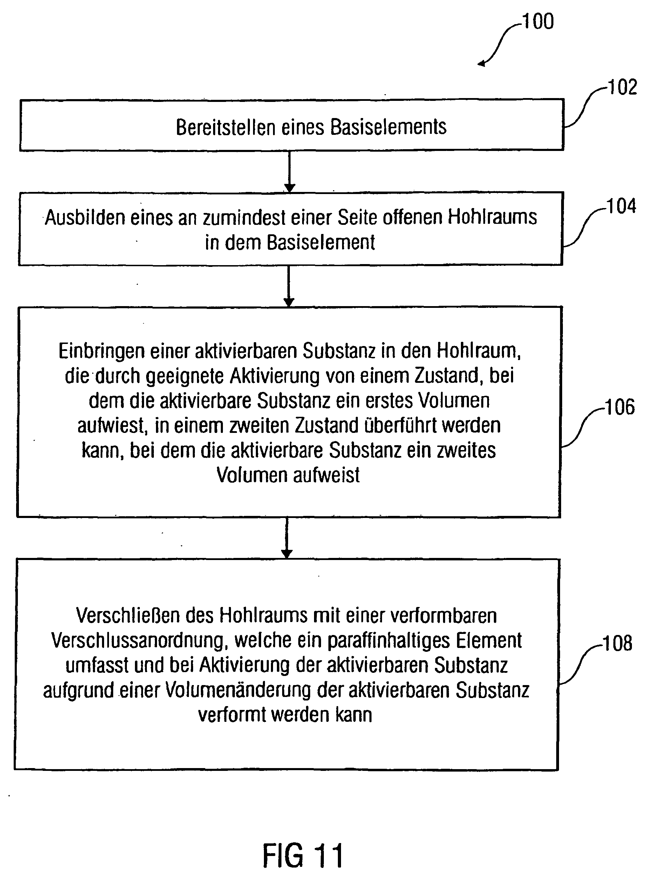

Fig. 11 zeigt ein schematisches Flussdiagramm eines Verfahrens 100 zur Herstellung eines fluidischen Aktors. Während eines Vorgangs 102 wird eine Basisanordnung bereitgestellt. Die Basisanordnung kann einstückig sein, z.B. in Form eines Substrats 1. Alternativ kann die Basisanordnung aus mehreren Elementen bestehen, wie z.B. dem Substrat 1 und einer strukturierten Folie 10 oder einem strukturierten Klebeband, so dass sich die Basisanordnung als ein Schichtaufbau ergibt. Während eines weiteren Vorgangs 104 wird Hohlraum in der Basisanordnung ausgebildet, der nach Vollendung des Vorgangs 104 zumindest an einer Seite noch offen ist. Je nachdem, wie die Basisanordnung aufgebaut ist, können die Vorgänge 102 und 104 auch zusammen-fallen. Beispielsweise kann der Hohlraum gleichzeitig beim Anbringen der strukturierten Folie 10 gebildet werden.

Während eines weiteren Vorgangs 106 des Herstellungsverfahrens 100 wird eine aktivierbare Substanz 20 in den Hohlraum 6 eingebracht. Je nach Art der aktivierbaren Substanz kann das Einbringen durch Gießen, Schütten, Spritzen oder ein vergleichbares Füllverfahren erfolgen. Das Einbringen kann ein Dosieren der aktivierbaren Substanz umfassen, damit eine spätere Wirkung des fluidischen Aktors (Auslenkung, Kraft, etc.) innerhalb eines vorgesehenen Toleranzbereichs ist.

Durch einen Vorgang 108 wird der zunächst noch offene Hohlraum 6 geschlossen, indem eine verformbare Verschlussanordnung 30; 4 über dem Hohlraum an der Basisanordnung angeordnet wird. Die Verschlussanordnung 30; 4 umfasst ein paraffinhaltiges Element. Die Verschlussanordnung kann bereits vorgefertigt sein, beispielsweise als paraffinhaltige, verformbare Folie. Es ist aber auch möglich, die Verschlussanordnung im Rahmen des Vorgangs 108 zu schaffen, indem zunächst eine Paraffinschicht erzeugt wird, die sich zumindest über die aktivierbare Substanz 20 legt, gegebenenfalls auch noch in einem Bereich außerhalb davon. Bei Bedarf können geeignete Masken, Schablonen oder Drucksiebe verwendet werden, um den Ort und die Form der Paraffinschicht zu definieren. Das Beschichten mit der Paraffinschicht kann durch beispielsweise durch einen Sprühprozess, einen Tauchprozess, einen Streichprozess oder einen Druckprozess. Nach erfolgtem Auftragen der Paraffinschicht kann eine optionale dehnbare Folie an der Oberfläche der Paraffinschicht angebracht werden. Die Reihenfolge der Paraffinschicht und der dehnbaren Folie kann auch umgekehrt werden, so dass zunächst die dehnbare Folie zum Verschließen des Hohlraums angebracht wird und dann die Paraffinschicht auf die dehnbare Folie aufgetragen wird.

Während des späteren Betriebs des fluidischen Aktors wird bei Aktivierung der aktivierbaren Substanz 20 die verformbare Verschlussanordnung aufgrund einer Volumenänderung der aktivierbaren Substanz verformt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Bauelement oder eine Komponente einer Vorrichtung auch als entsprechender Verfahrensschritt oder als Merkmal eines Verfahrensschritts zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterungen der Ausführungsbeispiele hierin präsentiert wurden, beschränkt sei.

## Patentansprüche

1. Fluidischer Aktor umfassend:
eine Basisanordnung (1, 10) mit zumindest einem darin ausgebildeten Hohlraum (6);
eine aktivierbare Substanz (20) innerhalb des Hohlraums (6), die konfiguriert ist, durch geeignete Aktivierung zumindest teilweise umgewandelt zu werden und dabei eine Druckänderung in dem Hohlraum (6) zu bewirken; und
eine verformbare Verschlussanordnung (30; 4) zum Verschließen des zumindest einen Hohlraums (6), **dadurch gekennzeichnet, dass** die Verschlussanordnung eine Folie mit einem Paraffinanteil (30) oder eine dehnbare Folie (41; 42) mit einer Paraffinschicht (40) an zumindest einer Hauptfläche umfasst, und bei Aktivierung der aktivierbaren Substanz (20) aufgrund der Druckänderung verformt werden kann.

2. Fluidischer Aktor nach Anspruch 1, wobei die dehnbare Folie (41, 42) zumindest eines der folgenden Materialien umfasst: Naturkautschuk, Silikonkautschuk, Butylgummi und Polybutadien.

3. Fluidischer Aktor nach Anspruch 1, wobei das paraffinhaltige Element eine mit einer Paraffinschicht (40) versehene Elastomerschicht (41, 42) ist.

4. Fluidischer Aktor, nach einem der vorhergehenden Ansprüche,
wobei das paraffinhaltige Element (30, 40) ein direkt auf die aktivierbare Substanz (20) aufgebrachtes dispensiertes oder gedrucktes Element ist.

5. Fluidischer Aktor nach einem der vorhergehenden Ansprüche, wobei die Verschlussanordnung (30; 40, 41) ein Rillenmuster oder ein Wellenmuster aufweist.

6. Fluidischer Aktor nach Anspruch 5, wobei die Verschlussanordnung (30; 40, 41) eine Membran umfasst aus zumindest einem von: Metall, thermoplastischem Kunststoff, duroplastischem Kunststoff und Elastomer,
wobei die Membran mit einer zumindest teilweise Paraffin enthaltenden Schicht (40) als das paraffinhaltige Element versehen ist.

7. Fluidischer Aktor gemäß einem der vorhergehenden Ansprüche, wobei die Basisanordnung ein Bodenelement (1) und eine strukturierte Schicht (10) umfasst, die den Hohlraum (6) gemeinsam mit der Verschlussanordnung (30; 40, 41) begrenzen.

8. Fluidischer Aktor gemäß einem der vorhergehenden Ansprüche, weiterhin umfassend mindestens einen weiteren Hohlraum (8), der von dem ersten Hohlraum (6) durch die Verschlussanordnung (30; 4) getrennt ist.

9. Fluidischer Aktor gemäß einem der vorhergehenden Ansprüche, wobei der fluidische Aktor ein elektrolytischer Aktor ist und die aktivierbare Substanz ein Elektrolyt (20) ist.

10. Fluidischer Aktor gemäß einem der vorhergehenden Ansprüche, wobei die Verschlussanordnung eine Wasserdampfpermeabilität von weniger als 10 g/m²/d aufweist und bevorzugt von weniger als 1g/m²/d.

11. Fluidischer Aktor gemäß einem der vorhergehenden Ansprüche, wobei die Verschlussanordnung eine Streckspannung von weniger als 20 MPa, bevorzugt weniger als 5 MPa aufweist.

12. Fluidischer Aktor gemäß einem der vorhergehenden Ansprüche, wobei die Basisanordnung eine Leiterplatte (1) umfasst.

13. Fluidischer Aktor gemäß einem der vorhergehenden Ansprüche, umfassend eine Vielzahl von Hohlräumen, die in der Basisanordnung ausgebildet sind, sowie eine Vielzahl von Verschlussanordnungen, die konfiguriert sind, jeweils einen der Vielzahl von Hohlräumen zu verschließen.

14. Fluidischer Aktor gemäß Anspruch 13, wobei die Vielzahl von Verschlussanordnungen als eine zusammenhängende Verschlusseinheit ausgebildet sind.

15. Verfahren zum Herstellen eines fluidischen Aktors umfassend:
Bereitstellen einer Basisanordnung (1, 10);
Ausbilden eines an zumindest einer Seite offenen Hohlraums (6) in der Basisanordnung (1, 10);
Einbringen einer aktivierbaren Substanz (20) in den Hohlraum (6), die konfiguriert ist, durch geeignete Aktivierung zumindest teilweise umgewandelt zu werden und dabei eine Druckänderung in dem Hohlraum (6) zu bewirken; und
Verschließen des Hohlraums mit einer verformbaren Verschlussanordnung (30; 4), welche eine Folie mit einem Paraffinanteil (30) oder eine dehnbare Folie (41; 42) mit einer Paraffinschicht (40) an zumindest einer Hauptfläche umfasst, und bei Aktivierung der aktivierbaren Substanz (20) aufgrund der Druckänderung verformt werden kann.

## Claims

1. A fluidic actuator comprising:
a basic arrangement (1, 10) comprising at least one cavity (6) formed therein;
an activatable substance (20) within the cavity (6), configured to be converted, at least partly, by means of suitable activation and thus cause a change in pressure in the cavity (6); and
a deformable seal arrangement (30; 4) for sealing the at least one cavity (6), **characterized in that** the seal arrangement includes a film comprising a paraffin portion (30) or an expandable film (41; 42) with a paraffin layer (40) on at least one main surface (44) and may be deformed when activating the activatable substance (20) due to the change in pressure.

2. The fluidic actuator in accordance with claim 1, wherein the expandable film (41, 42) includes at least one of the following materials: natural rubber, silicone rubber, butyl rubber, and polybutadiene.

3. The fluidic actuator in accordance with claim 1, wherein the element containing paraffin is an elastomer layer (41, 42) provided with a paraffin layer (40).

4. The fluidic actuator in accordance with one of the preceding claims,
wherein the element (30, 40) containing paraffin is a dispensed or printed element applied directly onto the activatable substance (20).

5. The fluidic actuator in accordance with one of the preceding claims, wherein the seal arrangement (30; 40, 41) comprises a groove pattern or a wave pattern.

6. The fluidic actuator in accordance with claim 5, wherein the seal arrangement (30; 40, 41) includes a membrane made of at least one of: metal, thermoplastic, thermosetting plastic and elastomer,
wherein the membrane is provided with a layer (40) at least partly containing paraffin as the element containing paraffin.

7. The fluidic actuator in accordance with one of the preceding claims, wherein the basic arrangement includes a floor element (1) and a patterned layer (10) which bound the cavity (6) together with the seal arrangement (30; 40, 41).

8. The fluidic actuator in accordance with one of the preceding claims, further comprising at least another cavity (8) which is separated from the first cavity (6) by the seal arrangement (30; 4).

9. The fluidic actuator in accordance with one of the preceding claims, wherein the fluidic actuator is an electrolytic actuator and the activatable substance is an electrolyte (20).

10. The fluidic actuator in accordance with one of the preceding claims, wherein the seal arrangement comprises a water vapor permeability of less than 10g/m²/d and, preferably, less than 1g/m²/d.

11. The fluidic actuator in accordance with one of the preceding claims, wherein the seal arrangement comprises a yield stress of less than 20 MPa, preferably less than 5 MPa.

12. The fluidic actuator in accordance with one of the preceding claims, wherein the basic arrangement includes a printed circuit board (1).

13. The fluidic actuator in accordance with one of the preceding claims, comprising a plurality of cavities formed in the basic arrangement, and a plurality of seal arrangements configured to each seal one of the plurality of cavities.

14. The fluidic actuator in accordance with claim 13, wherein the plurality of seal arrangements are implemented as a continuous seal unit.

15. A method for manufacturing a fluidic actuator, comprising:
providing a basic arrangement (1, 10);
forming a cavity (6), open on at least one side, in the basic arrangement (1, 10);
introducing an activatable substance (20) into the cavity (6), configured to be converted, at least partly, by suitable activation and thus cause a change in pressure in the cavity (6); and
sealing the cavity using a deformable seal arrangement (30; 4) which includes a film comprising a paraffin portion (30) or an expandable film (41; 42) with a paraffin layer (40) on at least one main surface (44) and may be deformed when activating the activatable substance (20) due to the change in pressure.

## Revendications

1. Actionneur fluidique, comprenant:
un aménagement de base (1, 10) avec au moins une cavité y formée (6);
une substance activable (20) dans la cavité (6) qui est configurée de manière à être transformée au moins partiellement par une activation appropriée et à provoquer ainsi une variation de pression dans la cavité (6); et
un aménagement d'obturation déformable (30; 4) destiné à obturer l'au moins une cavité (6),
**caractérisé par le fait que** l'aménagement d'obturation comporte un film avec une part de paraffine (30) ou un film extensible (41; 42) avec une couche de paraffine (40) sur au moins une surface principale et qui, en cas d'activation de la substance activable (20), peut être déformé par suite de la variation de pression.

2. Actionneur fluidique selon la revendication 1, dans lequel le film extensible (41, 42) comprend au moins l'un des matériaux suivants: caoutchouc naturel, caoutchouc de silicone, caoutchouc au butyle et polybutadiène.

3. Actionneur fluidique selon la revendication 1, dans lequel l'élément à teneur en paraffine est une couche d'élastomère (41, 42) pourvue d'une couche de paraffine (40).

4. Actionneur fluidique selon l'une des revendications précédentes,
dans lequel l'élément à teneur en paraffine (30, 40) est un élément distribué ou imprimé directement sur la substance activable (20).

5. Actionneur fluidique selon l'une des revendications précédentes, dans lequel l'aménagement d'obturation (30; 40, 41) présente un motif de rainures ou un motif d'ondes.

6. Actionneur fluidique selon la revendication 5, dans lequel l'aménagement d'obturation (30; 40, 41) comporte une membrane réalisée en au moins l'un parmi: métal, thermoplastique, plastique thermodurcissable et élastomère,
dans lequel la membrane est munie d'une couche au moins partiellement à teneur en paraffine (40) comme élément à teneur en paraffine.

7. Actionneur fluidique selon l'une des revendications précédentes, dans lequel l'aménagement de base comporte un élément de fond (1) et une couche structurée (10) qui délimitent la cavité (6) ensemble avec l'aménagement d'obturation (30; 40, 41).

8. Actionneur fluidique selon l'une des revendications précédentes, comportant par ailleurs au moins une autre cavité (8) qui est séparée de la première cavité (6) par l'aménagement d'obturation (30; 4).

9. Actionneur fluidique selon l'une des revendications précédentes, dans lequel l'actionneur fluidique est un actionneur électrolytique et la substance activable est un électrolyte (20).

10. Actionneur fluidique selon l'une des revendications précédentes, dans lequel l'aménagement d'obturation présente une perméabilité à la vapeur d'eau de moins de 10 g/m²/d et, de préférence, de moins de 1 g/m²/d.

11. Actionneur fluidique selon l'une des revendications précédentes, dans lequel l'aménagement d'obturation présente une limite d'élasticité de moins de 20 MPa, de préférence de moins de 5 MPa.

12. Actionneur fluidique selon l'une des revendications précédentes, dans lequel l'aménagement de base comporte une plaque de circuit imprimé (1).

13. Actionneur fluidique selon l'une des revendications précédentes, comportant une pluralité de cavités formées dans l'aménagement de base, ainsi qu'une pluralité d'aménagements d'obturation qui sont configurés pour obturer, chacun, une de la pluralité de cavités.

14. Actionneur fluidique selon la revendication 13, dans lequel la pluralité d'aménagements d'obturation sont formés comme une unité d'obturation continue.

15. Procédé de fabrication d'un actionneur fluidique, comprenant le fait de:
préparer un aménagement de base (1, 10) ;
réaliser une cavité (6) ouverte au moins d'un côté dans l'aménagement de base (1, 10);
introduire une substance activable (20) dans la cavité (6) qui est configurée de manière à être transformée au moins partiellement par une activation appropriée et à provoquer ainsi une variation de pression dans la cavité (6); et
obturer la cavité par un aménagement d'obturation déformable (30; 4) qui comporte un film avec une part de paraffine (30) ou un film extensible (41; 42) avec une couche de paraffine (40) sur au moins une surface principale et qui, en cas d'activation de la substance activable (20), peut être déformé par suite de la variation de pression.
